**Europäisches Patentamt**

**European Patent Office**

**Office européen des brevets**

(19)

(11) Veröffentlichungsnummer: **0 039 744**
**A1**

(12) # EUROPÄISCHE PATENTANMELDUNG

(21) Anmeldenummer: **80106995.6**

(22) Anmeldetag: **13.11.80**

(51) Int. Cl.³: **F 16 L 11/08**
**F 16 L 11/11, B 29 D 23/00**

(30) Priorität: **14.05.80 DE 3018417**

(43) Veröffentlichungstag der Anmeldung:
**18.11.81 Patentblatt 81/46**

(84) Benannte Vertragsstaaten:
**AT BE CH DE FR GB IT LI LU NL SE**

(71) Anmelder: **Hans Grohe GmbH & Co KG**
**Postfach 45**
**D-7622 Schiltach(DE)**

(72) Erfinder: **Stahl, Eugen Helmut**
**Königsheimerstrasse 12**
**D-7205 Böttingen(DE)**

(74) Vertreter: **Patentanwälte Ruff und Beier**
**Neckarstrasse 50**
**D-7000 Stuttgart 1(DE)**

(54) **Flexibler doppelwandiger Druckschlauch, insbesondere Brauseschlauch, und Verfahren zu seiner Herstellung.**

(57) Die Erfindung betrifft einen flexiblen doppelwandigen Druckschlauch (1), insbesondere einen Brauseschlauch, mit einem extrudierten Innenschlauch (2) aus elastomerem Material und einem extrudierten Außenschlauch (8) aus thermoplastischem Material, der mindestens teilweise im Abstand vom Innenschlauch (2) gehalten ist, sowie ein Verfahren zu seiner Herstellung. Durch den elastomeren Innenschlauch (2) besitzt der Druckschlauch (1) eine hohe Lebensdauer und kann längselastisch ausgebildet werden.

FIG. 1

EP 0 039 744 A1

**0039744**

PATENTANWÄLTE  **RUFF** UND **BEIER**  STUTTGART

Dipl.-Chem. Dr. Ruff
Dipl.-Ing. J. Beier

Neckarstraße 50
D-7000 Stuttgart 1
Tel.: (0711) 227051*
Telex 07-23412 erub d

7. November 1980 R/Schö

A 18 739 EP

Anmelder: Hans Grohe GmbH & Co. KG
Postfach 45
7622 Schiltach

Flexibler doppelwandiger Druckschlauch, insbesondere
Brauseschlauch, und Verfahren zu seiner Herstellung.

Die Erfindung betrifft einen flexiblen doppelwandigen Druckschlauch, insbesondere Brauseschlauch, mit einem extrudierten
Innenschlauch und einem extrudierten Außenschlauch aus thermoplastischem Material, der mindestens teilweise im Abstand vom
Innenschlauch gehalten ist, sowie ein Verfahren zu seiner Herstellung.

Aus der deutschen Patentschrift 2 261 126 ist ein flexibler
Kunststoffschlauch bekannt, bei dem um den Innenschlauch aus
weichgemachtem Polyvinylchlorid eine Drahtwendel mit rundem
Querschnitt aus Metall oder einem harten Kunststoff gelegt ist,
ohne mit dem Innenschlauch verbunden zu sein. Zwischen die
Wendelgänge dieser Drahtwendel ist ein dünnes Hart-PVC-Bändchen
gewickelt, das wesentlich breiter ist als die Drahtstärke der
Drahtwendel. Dieses wendelförmig verlaufende Hart-PVC-Bändchen
ist sowohl mit dem Innenschlauch als auch mit dem Außenschlauch
über seine gesamte Länge verbunden und hat die Aufgabe, zu verhindern, daß sich der Innenschlauch beim Biegen des Schlauches um kleine Radien nach innen wölbt und dabei den Durchflußquerschnitt vermindert. Der Schlauch ist jedoch verhältnismäßig steif. Bei der Biegung erfährt deshalb der über der Drahtwendel liegende Bereich des Außenschlauches eine erhebliche Stauchung und Auswulstung an der Schlauchseite mit geringerem Radius, was eine starke Materialbeanspruchung zur Folge hat.

Aus der deutschen Offenlegungsschrift 2 722 928 ist ein flexibler Kunststoffschlauch bekannt, bei dem ein flexibles Verstärkungsband aus relativ hartem Kunststoff wendelförmig um den Innenschlauch gewickelt und mit diesem und mit dem Außenschlauch fest verbunden ist und zwar mit dem Außenschlauch über radial abstehende umlaufende Verstärkungsrippen, die gleichzeitig den Abstand zwischen Außenschlauch und Innenschlauch bestimmen. Bei diesem flexiblen Schlauch ist der Zwischenraum zwischen den Gängen der Verstärkungswendel frei, wodurch an sich eine gute Durchbiegung des Schlauches möglich ist. Es hat sich jedoch gezeigt, daß die Flexibilität des Schlauches für den praktischen Gebrauch noch besser sein könnte. Auch ist die Verstärkungswendel im Querschnitt verhältnismäßig kompliziert aufgebaut, um Haftungsprobleme bei der Verbindung von Hartplastik mit weichgemachtem Kunststoff zu überwinden.

Demgegenüber liegt der Erfindung die Aufgabe zugrunde, einen Druckschlauch, insbesondere für die Verwendung als Brauseschlauch zu schaffen, dessen Flexibilität im Vergleich zu den bekannten verstärkten Kunststoffschläuchen verbessert ist und der auch bei langem Gebrauch keine Verschleißerscheinungen zeigt.

Die Erfindung ist dadurch gekennzeichnet, daß der Innenschlauch aus elastomerem Material besteht.

Bei einer bevorzugten Ausführungsform der Erfindung besteht der Innenschlauch aus Gummi, insbesondere aus heißwasserbeständigem Gummi. Durch die Verwendung von elastomerem Material wird einerseits die Funktionssicherheit des Schlauches erhöht, andererseits kann der Schlauch aufgrund der hohen Elastizität des Elastomer-Innenschlauches rückfedernd dehnbar ausgebildet werden. Auch die Flexibilität des Schlauches wird dadurch erhöht. und gleichzeitig wird erreicht, daß der Schlauch beim Biegen um kleine Radien weniger stark beansprucht wird, weil die Biegung durch die Dehnbarkeit des Elastomers an der Außenseite der Biegestelle erleichtert wird. Dies ist besonders der Fall, wenn zwischen Innen- und Außenschlauch eine Verstärkungswendel vorgesehen ist. Eine zur Verbesserung der Verbindung mit Innen- und Außenschlauch etwa vorgesehene Ummantelung der Verstärkungswendel kann im wesentlichen unflexibel oder an der Verstärkungswendel haftend ausgebildet sein.

Im folgenden wird in bezug auf das Material des Innenschlauches der Einfachheit halber von Gummi gesprochen, worunter aber elastomeres Material allgemein verstanden werden soll.

Da sich Gummi mit einem weichen thermoplastischen Kunststoff, so z.B. weichgemachtem PVC, weniger gut verbinden läßt als solche Kunststoffe untereinander, ist die Gummiaußenseite vorzugsweise mit einem Haftvermittler versehen, um so eine gute Verbindung mit der Verstärkungswendel zu erzielen. Der Haftvermittler kann streifenförmig oder wendelförmig entsprechend dem Verlauf der Verstärkungswendel am Innenschlauch aufgetragen sein, ist in der Regel aber vollflächig vorgesehen.
Als Haftvermittler kann mit Vorteil ein elastomerer Kleber, z.B. auf Polyurethanbasis, dienen. Es ist auch möglich,
zusätzlich oder an Stelle eines Klebers den gesamten Gummiinnenschlauch mit einer dünnen Schicht aus Weichplastik zu
ummanteln, wobei hierzu vorzugsweise der gleiche Kunststoff
verwendet wird, aus dem auch eine etwaige Ummantelung der
Verstärkungswendel besteht. Auf diese Weise kann eine sehr
feste Verbindung zwischen der Ummantelung der Verstärkungswendel und dem Innenschlauch geschaffen werden.

Der erfindungsgemäße Schlauch ist weiterhin mit Vorteil in
axialer Richtung durch im wesentlich axial verlaufende Fäden
verstärkt, die zwischen Innenschlauch und Verstärkungswendel
angeordnet sind. Als Fäden eignen sich besonders flexible
aber nicht dehnbare multifile Fäden, die sich flach an den
Innenschlauch anlegen . Die axialen Verstärkungsfäden sind
vorzugsweise länger gehalten als der Innenschlauch in entspanntem Zustand. Dadurch ist es möglich, den Schlauch auch
bei einer Längsverstärkung längselastisch auszubilden, wobei jedoch die Längsdehnung durch die Länge der Fäden eindeutig begrenzt werden kann. Um die Dehnbarkeit zu gewährleisten, verlaufen die Versteifungsfäden auf dem Innenschlauch
nicht völlig geradlinig, sondern in einer solchen Weise, daß
sie noch gestreckt werden können. So können die Fäden mit Vorteil etwa zickzackförmig und/oder unter Ausbildung von schlaufenförmigen Noppen auf dem Innenschlauch angeordnet sein. Die
Längselastizität des Schlauches, die im Bereich zwischen 5%
und 100% liegen kann, wird so durch die Fäden vorzugsweise
auf ca. 10 bis 20% begrenzt, was für die meisten Fälle ausreicht. Durch die Längselastizität des Schlauches ist es
möglich, den Abstand zwischen den Gängen der Wendel auch
kleiner als die Hälfte oder ein Drittel der Breite des Ver-

A 18 739 EP     - 5 -

stärkungsbandes zu halten, wobei trotzdem eine gute Flexibilität gewährleistet ist. Es ist sogar möglich, daß die einzelnen Gänge dicht an dicht liegen.

Dadurch, daß die Verstärkungswendel das Verbindungselement zwischen Innen- und Außenschlauch darstellt, wird erreicht, daß der Zwischenraum zwischen den Gängen der Verstärkungswendel freibleiben kann, so daß er beim Biegen des Schlauches voll zum Zusammenschieben der Verstärkungswendel an der Biegungsinnenseite verfügbar ist. Andererseits kann dieser Zwischenraum beim erfindungsgemäßen Schlauch auch kleiner gehalten werden als die Breite der Verstärkungswendel, insbesondere etwa 1/3 bis 2/3 mal so breit, wodurch die Metallisierung der Wendel durch die kleineren Ganghöhen stärker zum Ausdruck kommt, so daß der Schlauch optisch wie ein Metallschlauch aussieht. Die Verstärkungswendel ist vorzugsweise als flacher Materialstreifen mit im wesentlichem rechteckigem bis ovalem Querschnitt ausgebildet, wobei die Flachseiten zum Außen- bzw. Innenschlauch weisen.

Die Flexibilität des erfindungsgemäßen Schlauches kann bei einer Ausführungsform noch dadurch erhöht werden, daß der radiale Abstand zwischen Innen- und Außenschlauch im Bereich zwischen den Gängen der Verstärkungswendel durch Verjüngung des Außenschlauches und/oder Ausbauchung des Innenschlauches kleiner ist als im Bereich der Verstärkungswendel. Eine solche relative Annäherung von Außen- und Innenschlauch kann auf verschiedene Art und Weise erreicht werden, z.B. durch Anlegen eines Druckes beim Umspritzen des verstärkten Innenschlauches mit der Masse des Außenschlauches, wobei der Grad der relativen Annäherung durch die Höhe des Druckes reguliert werden kann. Die relative Annäherung zwischen Außenschlauch und Innenschlauch kann sogar so weit gehen, daß sich die beiden Schläuche im Zwischenraum zwischen den Gängen der Verstärkungswendel berühren, wo sie sogar bleibend miteinander verbunden sein können.

Die Erfindung betrifft auch ein Verfahren zur Herstellung des Druckschlauches unter Verwendung eines Innenschlauches aus elastomerem Material, insbesondere Gummi.

Der Innenschlauch wird mit Vorteil vor dem Umwickeln mit einem Verstärkungsband mit einem vorzugsweise elastischen Kleber beschichtet. Der Innenschlauch kann in gedehntem Zustand , vorzugsweise um etwa 5 bis 20 %, mit dem Verstärkungsband umwickelt werden. Dadurch kann mit einer verhältnismäßig großen Ganghöhe gewickelt werden, die sich beim Rückfedern entsprechend verringert. Auf diese Weise ist es möglich, die einzelnen Windungen dicht aneinander zu legen, wobei sie sogar durch eine Vorspannung aneinander gezogen sein können.

Werden zur Axialverstärkung axiale Verstärkungsfäden mit dem Innenschlauch verbunden, dann erfolgt dies vorzugsweise bei gedehntem Innenschlauch, wobei die Dehnung 5 bis 100 %, insbesondere 10 bis 20 % betragen kann. Die axialen Verstärkungsfäden werden bei einer Ausführungsform mindestens stellenweise mit dem Innenschlauch verklebt.

Es kann von Vorteil sein, den Innenschlauch zur radialen Stabilisierung und zur Verbesserung der Verbindung mit der Verstärkungswendel und ggf. dem Außenschlauch mit einem Mantel aus thermoplastischem Material zu umspritzen, das vorzugsweise elastische Eigenschaften hat, und die Bewegungen des Gummischlauches mitmachen kann. Vor dem Umspritzen kann der Innenschlauch mit einem Haftvermittler, z.B. einem Kleber beschichtet werden. Das Umspritzen des Innenschlauches mit dem weichgemachten thermoplastischen Kunststoff wird vorzugsweise in ungedehntem Zustand des Innenschlauches vorge-

0039744

A 18 739 EP                    - 7 -

nommen. Beim Umspritzen des mit der Verstärkungswendel versehenen Innenschlauches kann dieser mehr oder weniger stark
gedehnt werden, wodurch die Eigenschaften des Schlauches
variiert werden können.

A 18 489/90                 - 8 -

Weitere Merkmale und Vorteile der Erfindung ergeben sich aus
der nachfolgenden Beschreibung von bevorzugten Ausführungsformen in Verbindung mit der Zeichnung und den Ansprüchen.

In der Zeichnung zeigen

Fig. 1        einen Längsschnitt durch eine Ausführungsform der Erfindung,

Fig. 2        einen Querschnitt durch die Ausführungsform nach Fig. 1,

Fig. 3        einen Querschnitt durch die ummantelte Verstärkungswendel von Fig. 1 in vergrößertem Maßstab
              und

Fig. 4        einen Querschnitt durch eine andere Ausführungsform der Erfindung.

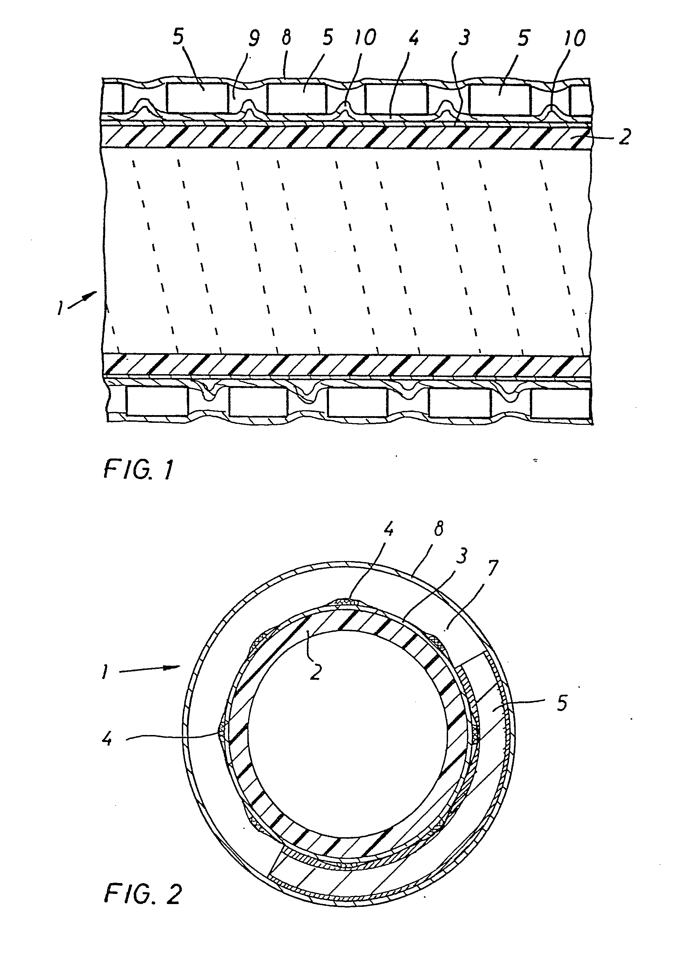

Bei der in der Zeichnung in den Figuren 1 bis 3 dargestellten Ausführungsform der Erfindung ist ein doppelwandiger
Brauseschlauch 1 vorgesehen, dessen Innenschlauch 2 aus
Neopren besteht und der einen Innendurchmesser von ca. 8 mm
und eine Wandstärke von ca. 1 mm besitzt. Der Innenschlauch 2
weist an seiner Außenseite eine Schicht 3 aus einem elastomeren Kleber auf, auf dem acht im wesentlich axial verlaufende multifile Verstärkungsfäden 4 flächig aufgelegt sind.

Um den so bewehrten Innenschlauch ist eine Verstärkungswendel 5 gewickelt, die dem Schlauch 2 die notwendige Radialstabilität verleiht. Die Verstärkungswendel 5 besteht aus
Hart-PVC, hat einen rechteckig bis ovalen Querschnitt, eine
Dicke von ca. 0,5 bis 1 mm eine eine Breite von ca. 3 bis
4 mm. Die Verstärkungswendel 5 ist an ihrer Außenseite mit
einer dünnen Metallfolie oder metallbedampften Kunststoff-

0039744

folie 6, z. B. einer Polyesterfolie belegt, die ihr das gewünschte metallische Aussehen verleiht. Die Verstärkungswendel 5 ist mitsamt der metallisierten Folie schlauchartig
mit einer 0,1 bis 0,4 mm starken Schicht aus Weich-PVC umspritzt, die die Verstärkungswendel dicht umschließt, jedoch
nicht an ihr haftet. In dieser Ummantelung 7 ist die Verstärkungswendel 5 bei Einwirkung von Kräften verschieblich,
insbesondere dann, wenn die Ummantelung bei Biegung des
Schlauches 1 quergedehnt wird.

Die ummantelte Verstärkungswendel 5 dient als Verbindungselement für die Verbindung zwischen dem Innenschlauch 2 und
einem extrudierten Außenschlauch 8 aus Weich-PVC, wobei die
flächige haftende Verbindung zwischen der Ummantelung 7 und
dem Innenschlauch 2 über die Kleberschicht 3 erfolgt, wogegen die Ummantelung 7 mit dem Außenschlauch 8 verschweißt
ist. Die Steigung der Verstärkungswendel 5 entspricht etwa
dem 1 1/2-fachen bis 1 3/4-fachen der Breite der Verstärkungswendel 5, so daß der Zwischenraum 9 zwischen zwei Gängen
der Verstärkungswendel kleiner ist als die Breite der Verstärkungswendel 5. In diesen Zwischenraum ist der Außenschlauch 8 unter Ausbildung einer entsprechenden Verjüngung
etwas eingezogen. Im übrigen ist der Zwischenraum, abgesehen von radial nach außen ragenden Noppen 10 der axialen
Verstärkungsfäden 4, hohl und frei von zusätzlichen Füll-
bzw. Verstärkungselementen.

Die axialen Verstärkungsfäden 4 sind um ca. 10% länger als
der Gummischlauch 2 in entspanntem Zustand und verlaufen
auf dem Schlauch 2 leicht schlangenlinienförmig bzw. zickzackförmig und/oder bilden die in den Hohlraum 9 ragenden
abstehenden Noppen 10 und ermöglichen somit eine definierte Dehnung des Schlauches 1, wobei sie sich bei der Dehnung strecken und diese dann begrenzen. Durch diese Ausbildung ist eine hohe Flexibilität des gesamten Brauseschlauches gegeben, die durch die balgartigen Verjüngungen des Außenschlauches an den Zwischenräumen 9 zwischen den Gängen der Verstärkungswendel 5 noch unterstützt wird. Trotz des geringen Verhältnisses von Ganghöhe zur Breite der Verstärkungswendel 5, d. h. trotz der schmalen Zwischenräume zwischen den Gängen der Wendel sind somit exakt kreisförmige Biegungen des Schlauches 1 mit einem Radius von 30 mm und kleiner möglich.

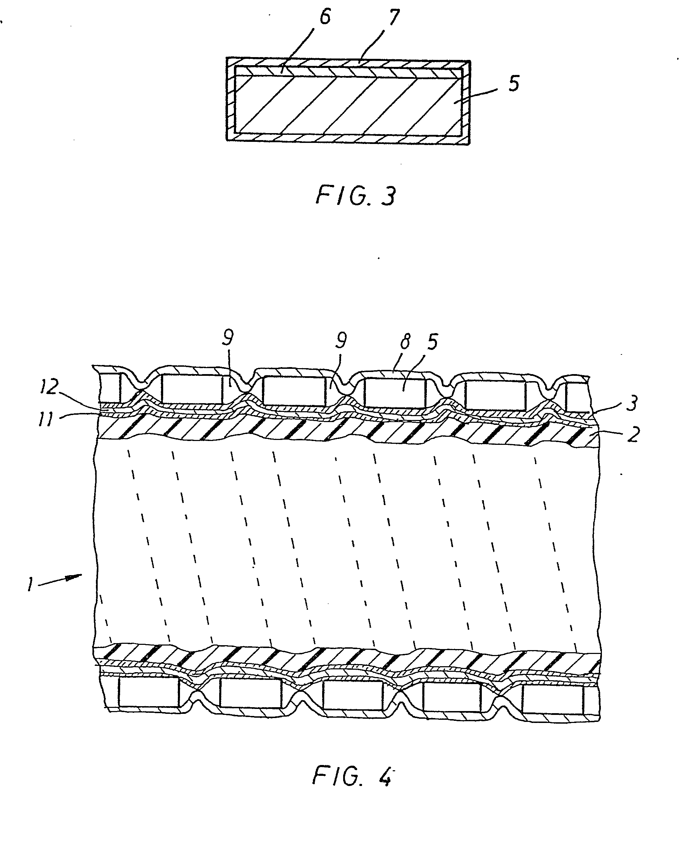

Bei der in Fig. 4 dargestellten Ausführungsform der Erfindung sind die gleichen Teile wie bei der vorhergehend beschriebenen Ausführungsform mit den gleichen Bezugszeichen versehen. Bei dieser Ausführungsform ist der ebenfalls aus Neopren bestehende Gummiinnenschlauch auf seiner Außenseite noch mit einer zusätzlichen Ummantelung versehen. Diese zusätzliche Ummantelung besteht in einer vollflächig aufgebrachten Kleberschicht 11 aus einem elastomeren Kleber, und einer dünnen auf den Gummischlauch extrudierten Schicht 12 aus Weich-PVC für die der Kleber 11 als Haftvermittler dient, und die eine Wandstärke von ca. 0,1 bis 0,5 mm hat. Da diese weiche Zwischenschicht 12 vollflächig am Gummischlauch anliegt, wird mit Hilfe der Kleberschicht 11 eine gute Verbindung erzielt, die sich auch nach vielen Biege- und Streckvorgängen nicht löst. Auf der Außenseite der Weich-PVC-Zwischenschicht ist wiederum wie bei der vorhergehenden Ausführungsform eine Kleberschicht 3 vorgesehen, die dazu dient, eine innige Verbindung zwischen der Ummantelung 7 der Verstärkungswendel 5 und der Weich-PVC-Zwischenschicht 12 zu erzielen. Da sowohl die Ummantelung 7 als auch die Zwischenschicht 12 aus Weich-PVC bestehen, kann auch auf die Kleberschicht 3 verzichtet werden, wobei dann die Verbindung zwischen Ummantelung 4 und PVC-Zwischenschicht 12 durch Verschweißung bzw. Lösungsmittelverklebung erfolgen kann.

Die Ausführungsform nach Fig. 4 unterscheidet sich aber noch in einem weiteren Merkmal von der Ausführungsform nach Fig. 1. Wie aus Fig. 4 zu ersehen ist, sind die Abschnitte des Gummischlauches 2 mit der darauf befindlichen Weich-PVC-Zwischenschicht,die die Zwischenräume 9 der Verstärkungswendel 5 überbrücken, radial nach außen ausgebaucht. Auf der anderen Seite ist der Außenschlauch 8 unter Ausbildung entsprechender wellenförmiger Verjüngungen so weit in die Hohlräume 9 zwischen den Gängen der Verstärkungswendel 5 eingezogen, daß er den Innenschlauch 2 mit der darauf befindlichen Weich-PVC-Zwischenschicht 12 berührt und mit dieser bleibend verbunden ist. Dadurch wird im Innen- und Außenschlauch eine gegenläufige Wellstruktur erhalten, die eine hervorragende Flexibilität und Biegefähigkeit des Schlauches gewährleistet. Falls erwünscht, können auch bei dieser Ausführungsform axiale Verstärkungsfäden vorgesehen sein.

Die Erfindung ist nicht auf die beschriebenen Ausführungsformen beschränkt. Es sind vielmehr Abwandlungen hiervon möglich, ohne daß der Rahmen der Erfindung verlassen wird. So kann der lichte Abstand zwischen den einzelnen Gängen der Verstärkungswendel so groß gehalten werden, daß eine flächige Verbindung des Außenschlauches mit dem glatten Innenschlauch unter Ausbildung eines im Längsschnitt mäanderförmigen Verlaufes des Außenschlauches erzielt wird. Dies ist möglich, wenn beim Umspritzen des mit der Wendel verstärkten Innenschlauches mit dem Material des Außenschlauches ein ausreichend starkes Druck angelegt wird, der den Außenschlauch eng an die Wendel und den Innenschlauch anlegt.

A 18 489/90 - 12 -

Auf der anderen Seite kann eine hervorragende Längselastizität dadurch erzielt werden, daß der Innenschlauch 2 mit geringer Ganghöhe mit der ummantelten Verstärkungswendel 5 umwickelt wird, so daß die Zwischenräume zwischen den einzelnen Gängen beim entspannten Gummischlauch nur etwa der Hälfte oder weniger der Breite der Verstärkungswendel entsprechen.Das Aufbringen des Außenschlauches kann dann bei gedehntem Innenschlauch unter mäßigem Druck erfolgen, wobei sich der Außenschlauch dann beim Entspannen balgartig im Querschnitt V-förmig nach innen legt. Wird der Schlauch dann gestreckt, dann wird der Außenschlauch an den balgartig verjüngten Stellen wieder glattgezogen, ohne daß eine wesentliche Dehnung des Außenschlauches erforderlich ist. Der gleiche Vorgang spielt sich auch beim Biegen des Schlauches an der Außenseite der Biegung ab. Es ist weiterhin auch möglich, den Innenschlauch aus einem thermoplastischen Kunststoff anstelle von Gummi zu fertigen, wobei auf eine besondere Kleberbeschichtung der Außenseite des Innenschlauches verzichtet werden kann, wenn der Innenschlauch ebenfalls aus Weichplastik, z. B. weichgemachtem PVC besteht. In diesem Falle reicht beispielsweise eine Lösungsmittelverklebung zur Erzielung der gewünschten Haftung zwischen der ummantelten Verstärkungswendel und dem Innenschlauch aus. Allerdings ist ein Brauseschlauch mit einem Innenschlauch aus Weich-PVC weniger beständig gegen heißes Wasser als ein entsprechender Schlauch mit einem Innenschlauch aus Gummi.

PATENTANWÄLTE **RUFF** UND **BEIER** STUTTGART

Dipl.-Chem. Dr. Ruff
Dipl.-Ing. J. Beier

Neckarstraße 50
D-7000 Stuttgart 1
Tel.: (0711) 227051*
Telex 07-23412 erub d

7. November 1980 R/Schö

- 13 -

A 18 739

Ansprüche

1. Flexibler doppelwandiger Druckschlauch, insbesondere Brauseschlauch, mit einem extrudierten Innenschlauch und einem
extrudierten Außenschlauch aus thermoplastischem Material,
der mindestens teilweise im Abstand vom Innenschlauch gehalten ist, dadurch gekennzeichnet, daß der Innenschlauch
(2) aus elastomerem Material besteht.

2. Druckschlauch nach Anspruch 1, dadurch gekennzeichnet, daß
der Innenschlauch (2) aus Gummi, insbesondere heißwasserbeständigem Gummi besteht.

3. Druckschlauch nach Anspruch 1 oder 2, dadurch gekennzeichnet,
daß der Innenschlauch (2) mit axial verlaufenden, flexiblen,
aber nicht dehnbaren Verstärkungsfäden (4) belegt ist, die
auf der Außenfläche des Innenschlauches (2) aufliegen, vorzugsweise mindestens teilweise mit dieser verbunden sind.

4. Druckschlauch nach Anspruch 3, dadurch gekennzeichnet, daß
die axialen Verstärkungsfäden (4) länger sind als der Innenschlauch (2) in entspanntem Zustand.

5. Druckschlauch nach einem der vorhergehenden Ansprüche, dadurch gekennzeichnet, daß er eine Längselastizität von 5 bis 100 %, insbesondere 10 bis 20 % besitzt, die vorzugsweise durch axiale Verstärkungsfäden (4) begrenzt ist.

6. Druckschlauch nach einem der vorhergehenden Ansprüche, dadurch gekennzeichnet, daß zur Erzielung eines Abstandes zwischen Außen- und Innenschlauch eine Verstärkungswendel (5) vorgesehen ist.

7. Druckschlauch nach Anspruch 6, dadurch gekennzeichnet, daß die axialen Verstärkungsfäden (4) im Bereich zwischen den Gängen der Verstärkungswendel (5) noppenförmige Dehnungsschlaufen (10) aufweisen.

8. Druckschlauch nach Anspruch 6 oder 7, dadurch gekennzeichnet, daß der wendelförmige Zwischenraum (9) zwischen den Gängen der Verstärkungswendel (5) schmaler ist als die Breite der Verstärkungswendel, vorzugsweise ein Drittel bis zwei Drittel mal so breit.

9. Druckschlauch nach einem der Ansprüche 6 bis 8 , dadurch gekennzeichnet, daß der Zwischenraum (9) zwischen den Gängen der Verstärkungswendel (5) frei von zusätzlichen Verstärkungselementen ist.

10. Druckschlauch nach einem der Ansprüche 6 bis 9, dadurch gekennzeichnet, daß der radiale Abstand zwischen Innenschlauch (2) und Außenschlauch (8) im Bereich zwischen den Gängen der Verstärkungswendel(5) durch Verjüngung des Außenschlauches (8) und/oder Ausbauchung des Innenschlauches (2, 12) kleiner ist als im Bereich der Verstärkungswendel (5).

11. Druckschlauch nach einem der Ansprüche 6 bis 10, dadurch gekennzeichnet, daß sich der Außenschlauch (8) und der Innenschlauch (2,12) im Zwischenbereich zwischen den Gängen der Verstärkungswendel (5) berühren und vorzugsweise bleibend miteinander verbunden sind.

12. Druckschlauch nach einem der vorhergehenden Ansprüche, dadurch gekennzeichnet, daß die Verbindung zwischen Innenschlauch (2) und Außenschlauch (8) über Verklebungen erfolgt.

13. Druckschlauch nach einem der Ansprüche 6 bis 12, dadurch gegekennzeichnet, daß zwischen Außenseite des Innenschlauches (2) und der Verstärkungswendel (5) ein Haftvermittler vorgesehen ist.

14. Druckschlauch nach einem der vorhergehenden Ansprüche, dadurch gekennzeichnet, daß der Innenschlauch (2) vollständig mit einem Haftvermittler (3,11,12) geschichtet ist.

15. Druckschlauch nach Anspruch 13 oder 14, dadurch gekennzeichnet, daß der Haftvermittler von einem Überzug (3,11) aus einem elastischen Kleber und/oder einer Ummantelung (12) des Innenschlauches gebildet wird, die aus Weichplastik besteht.

16. Verfahren zur Herstellung des Druckschlauches nach einem der vorhergehenden Ansprüche, dadurch gekennzeichnet, daß als Innenschlauch ein Elastomerschlauch, insbesondere ein Gummischlauch verwendet wird.

A 18 739 — 16 —

17. Verfahren nach Anspruch 16, dadurch gekennzeichnet, daß der Innenschlauch in gedehntem Zustand mit axialen Verstärkungsfäden belegt wird.

18. Verfahren nach Anspruch 17, dadurch gekennzeichnet, daß die Dehnung 5 bis 100 %, vorzugsweise 10 bis 20 % vorgenommen wird.

19. Verfahren nach einem der Ansprüche 16 bis 18, dadurch gekennzeichnet, daß der Innenschlauch in gedehntem Zustand, vorzugsweise in um 5 bis 20 % gedehntem Zustand, mit dem Verstärkungsband umwickelt wird.

20. Verfahren nach einem der Ansprüche 16 bis 19, dadurch gekennzeichnet, daß der Innenschlauch vor dem Umwickeln mit dem ummantelten Verstärkungsband mit einem vorzugsweise elastischen Kleber beschichtet wird.

21. Verfahren nach einem der Ansprüche 17 bis 20, dadurch gekennzeichnet, daß die axialen Verstärkungsfäden mindestens teilweise mit dem Innenschlauch verklebt werden.

22. Verfahren nach einem der Ansprüche 16 bis 21, dadurch gekennzeichnet, daß der Innenschlauch ggf. nach vorheriger Behandlung mit einem Kleber, mit einem Weichplastikmantel umspritzt wird, der vorzugsweise elastische Eigenschaften hat.

23. Verfahren nach Anspruch 22, dadurch gekennzeichnet, daß das Umspritzen des Innenschlauches mit dem Weichplastikmantel in ungedehntem Zustand des Innenschlauches vorgenommen wird.

24. Verfahren nach einem der Ansprüche 16 bis 23, dadurch gekennzeichnet, daß das Material des Außenschlauches beim Umspritzen des mit der Verstärkungswendel versehenen Innenschlauches durch Anlegen eines Druckes im Bereich der Zwischenräume zwischen den Gängen der Verstärkungswendel mindestens teilweise radial nach innen gedrückt wird.

25. Verfahren nach einem der Ansprüche 16 bis 24, dadurch gekennzeichnet, daß der mit der Verstärkungswendel versehene Innenschlauch in gedehntem Zustand mit dem Außenschlauch ummantelt wird.

26. Verfahren nach einem der Ansprüche 16 bis 25, dadurch gekennzeichnet, daß die Ganghöhe im Bereich der Endhülsen bei einem Brauseschlauch zunehmend kleiner gehalten wird, vorzugsweise so klein gehalten wird, daß die Gänge der Verstärkungswendel dicht an dicht liegen.

0039744

FIG. 1

FIG. 2

FIG. 3

FIG. 4

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - B - 1 228 468</u> (DAYCO) <br> * Spalte 3, Zeile 59 - Spalte 7, Zeile 12 * <br><br>-- | 1,2,5, 6,9,10- 13,14, 16-20, 24,25 |
| <br> D | <u>FR - A - 2 391 410</u> (GROHE) <br> * Seite 11, Zeile 16 - Seite 12, Zeile 32; Seite 13, Zeilen 17-26; Figuren 1,5 * <br> & DE - A - 2 722 928 <br><br>-- | 3-9, 17,18, 21 |
| | <u>US - A - 2 934 096</u> (BANKS) <br> * Spalte 2, Zeilen 56-59 * <br><br>-- | 2 |
| A | <u>US - A - 3 058 493</u> (MULLER) <br> * Figur 2 * <br><br>---- | 1 |

**KLASSIFIKATION DER ANMELDUNG (Int. Cl.³)**

F 16 L 11/08
11/11
B 29 D 23/00

**RECHERCHIERTE SACHGEBIETE (Int. Cl.³)**

F 16 L

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-08-1981 | ATKINS |

EPA form 1503.1   06.78